# EUROPEAN PATENT SPECIFICATION

(11) **EP 3 365 505 B1**
(45) Date of publication and mention of the grant of the patent: **07.06.2023**
(21) Application number: 16857892.0
(22) Date of filing: 06.10.2016
(51) Int. Cl.: E04B 1/21, E04B 1/24, E04B 1/41, E04B 1/58, F16S 3/00, F16B 13/04

(54) **CONNECTOR OPERABLE TO COUPLE TWO OR MORE COMPONENTS, AND METHOD OF COUPLING TWO OR MORE COMPONENTS**
VERBINDUNGSSTÜCK ZUM VERBINDEN VON ZWEI ODER MEHR KOMPONENTEN UND VERFAHREN ZUM VERBINDEN VON ZWEI ODER MEHR KOMPONENTEN
CONNECTEUR PERMETTANT DE COUPLER DEUX COMPOSANTS OU PLUS, ET PROCEDE DE COUPLAGE DE DEUX COMPOSANTS OU PLUS

(30) Priority: 21.10.2015 SG 10201508699Y
(43) Date of publication of application: 29.08.2018
(60) Divisional application: 23163057.5
(73) Proprietor: 2Elms Pte. Ltd., Singapore 589472 (SG)
(72) Inventor: NG, Wee Beng, Singapore 269269 (SG); WYATT, Gary Donald, Wantirna South, Victoria 3152 (AU)
(74) Representative: Marks & Clerk LLP
(86) International application number: PCT/SG2016/050491
(87) International publication number: WO 2017/069698

(56) References cited:
- WO-A1-99/55976
- WO-A1-03/102321
- WO-A1-2007/032746
- CA-A- 1 204 083
- CN-Y- 201 395 873
- FR-A1- 2 518 192
- GB-A- 2 393 978
- US-A- 3 778 175
- US-A- 4 075 924
- US-A- 5 028 186
- US-A- 5 590 974
- US-A- 5 937 608
- US-A1- 2009 044 469
- US-A1- 2010 126 103

## Description

### Background and Field

The invention relates to a connector for coupling two or more components together.

Support member systems for supporting walls are known, for example in WO03/102321. In such a system, a vertical stiffener may be used to support a wall and if the wall is constructed from bricks or other building or construction blocks, tie members may be inserted in cement work between the bricks or construction blocks to tie the wall to the vertical stiffener. The support member system may be configured in other ways to support other wall configurations and for example, an arrangement of vertical and horizontal stiffeners may be used to support various wall sections to strengthen the wall sections. However, such support member systems are not versatile and their applications are usually limited.

FR 2518192 A1 discloses a clamp to hold two light alloy perpendicular extrusions. However, a screw 12 needs to be used to secure the clamp to one of the extrusions. US2009/044469 describes a device for fastening skirting.

Thus, it is desirable to provide a support apparatus which addresses at least one of the disadvantages of the prior art and/or to provide the public with a useful choice.

### Summary

In this invention, there is provided a connector operable to couple two or more components together according to claim 1, and a method of coupling two or more components together according to claim 6.

Further aspects and preferred embodiments are set out in claim 2 et seq.

### Brief Description of the Drawings

Exemplary embodiments will now be described with reference to the accompanying drawings, wherein figures 1-26 relate to embodiments not claimed in the present invention, and figures 27-31c relate to the present invention, and in which:
Figure 1 is a perspective view of a support apparatus;
Figure 2 is an exploded perspective view of a hanger end plate assembly used in the support apparatus of Figure 1;
Figure 3 is partial cross sectional view in the direction D-D of the support apparatus of Figure 1;
Figure 4 is an enlarged view of portion EE of the support apparatus of Figure 1;
Figure 5 is an enlarged unassembled view of a connector in the form of a pin connector assembly comprising a double pin bracket and a double pin connector used in Figure 1 for coupling various components of the support apparatus securely together;
Figures 6a to 6c illustrate how the double pin connector is formed;
Figure 7 is a perspective view of a load bearing connector used in the support apparatus of Figure 1;
Figures 8a to 8c illustrate how the load bearing connector is formed;
Figure 9 is a closed-up view of the connection between a horizontal stiffener, the load bearing connector of Figure 7 and a vertical stiffener of the support apparatus of Figure 1;
Figure 10 is an enlarged view of a portion HH of Figure 9, prior to the connection and showing the double pin bracket of Figure 5;
Figure 11 shows the double pin bracket of Figure 10 being inserted into the load bearing connector and the vertical stiffener of Figure 10, and showing the double pin connector of Figure 5;
Figure 12 shows the double pin connector and the double pin bracket of

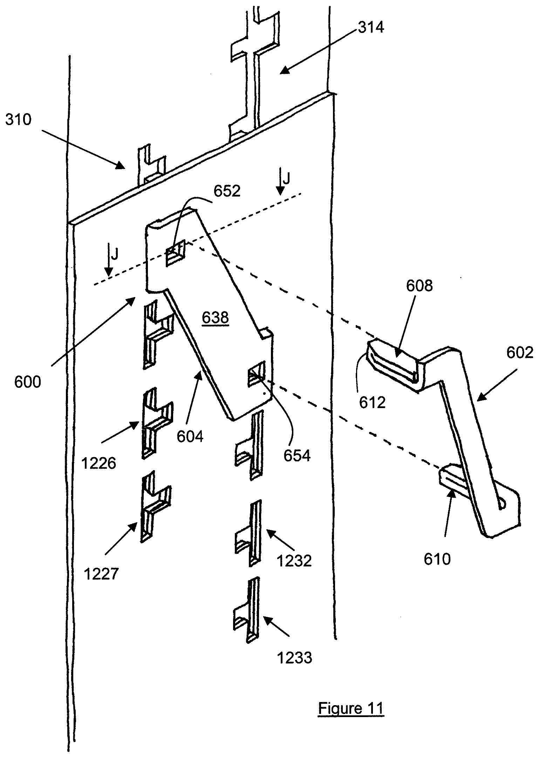

Figure 11 being assembled and arranged to attach the loading bearing connector and the vertical stiffener together;

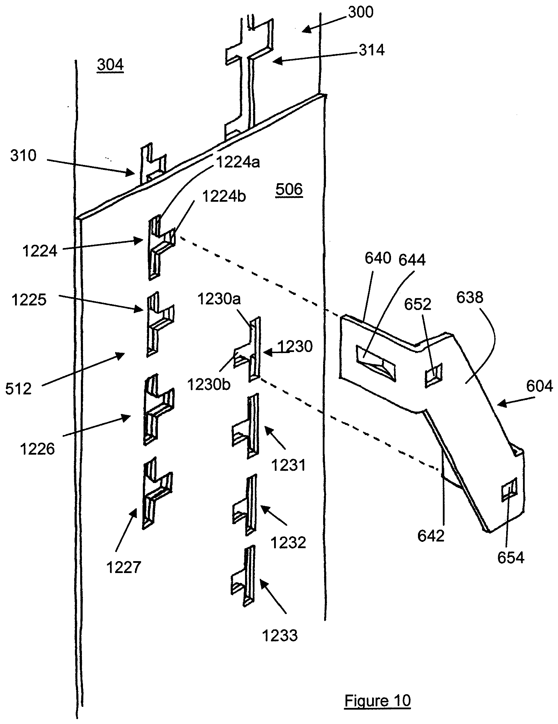

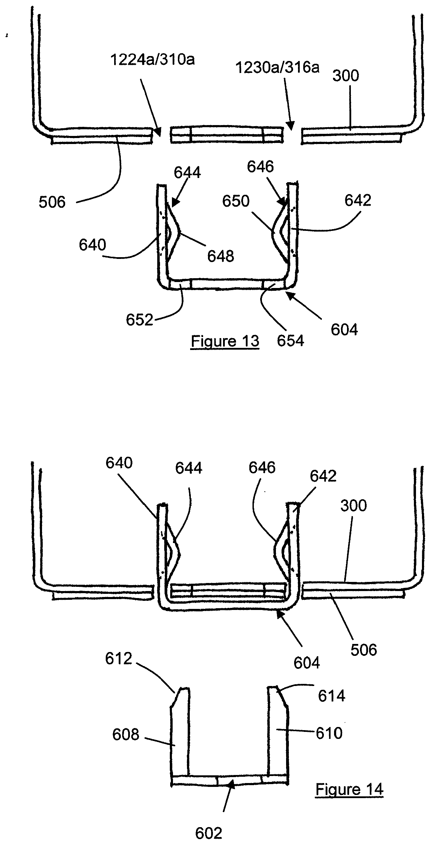

Figure 13 is a sectional plan view in a direction J-J of Figure 11, and which corresponds to Figure 10;
Figure 14 is a similar view of Figure 13 but corresponds to Figure 11;

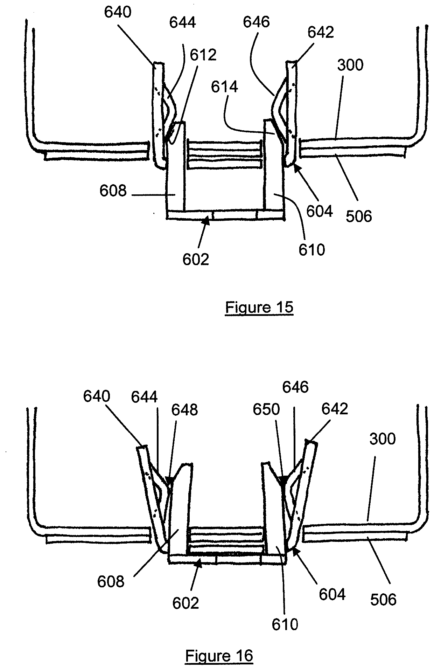

Figure 15 is a similar view of Figure 13 but shows double pin connector partially inserted into the double pin bracket;

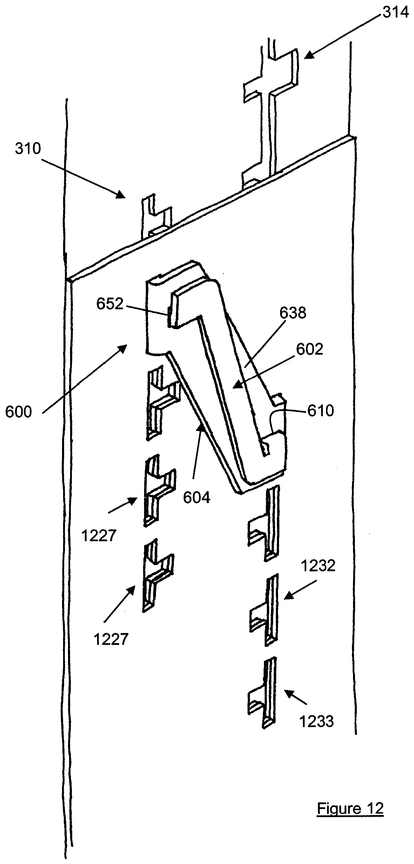

Figure 16 is a similar view of Figure 13 but shows the double pin connector fully inserted into the double pin bracket, which corresponds to Figure 12;

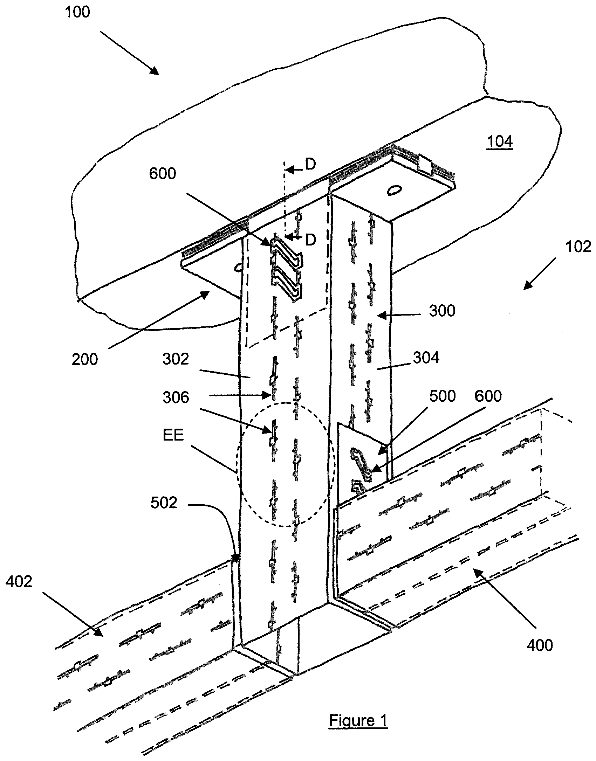

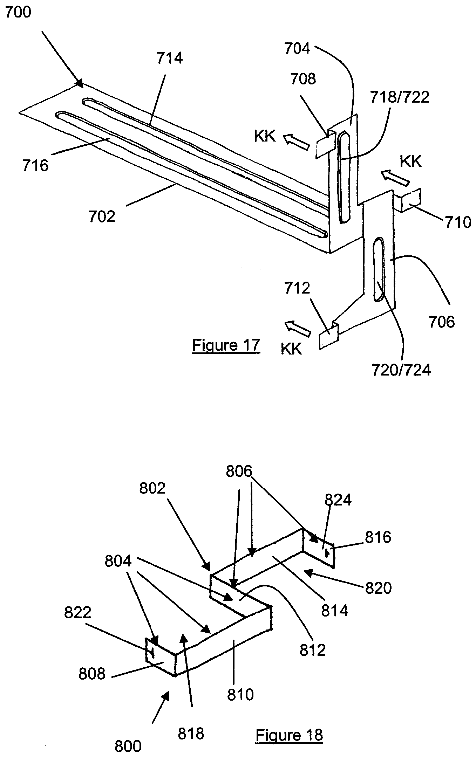

Figure 17 is a perspective view of the T-tie used in the support apparatus of Figure 1 to tie the support apparatus to a masonry wall;

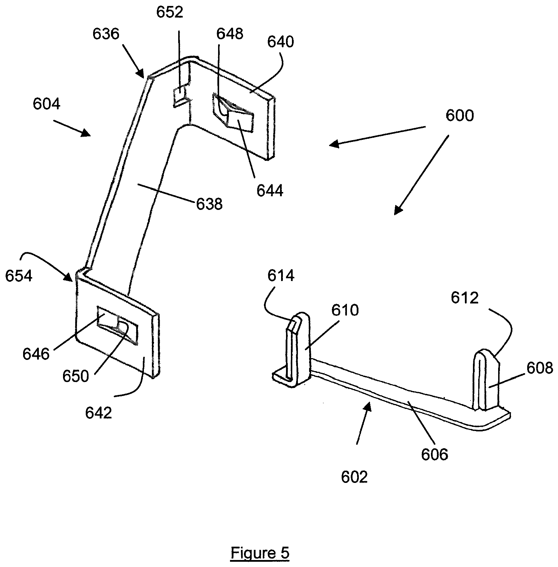

Figure 18 illustrates a binder connector which may be used together with the double pin connector of Figure 5;

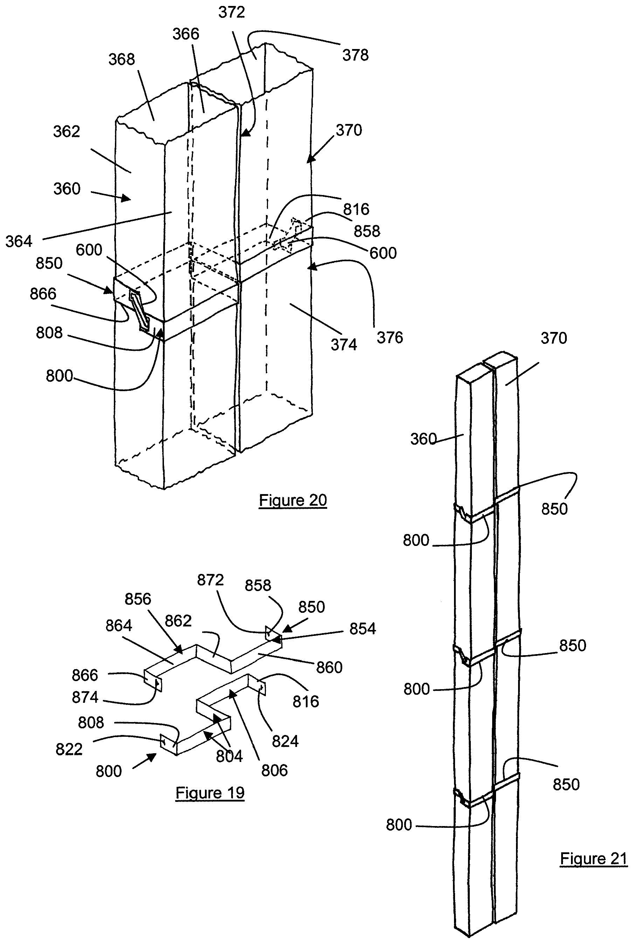

Figure 19 illustrates two of the binder connectors of Figure 18 which are placed in an opposing orientation in order to bind two stiffeners together;
Figure 20 illustrates how the two binder connectors of Figure 19 are used to bind two stiffeners together;
Figure 21 illustrates the use of a plurality of pairs of binder connectors of
Figure 19 to bind two stiffeners of substantial length or height together;

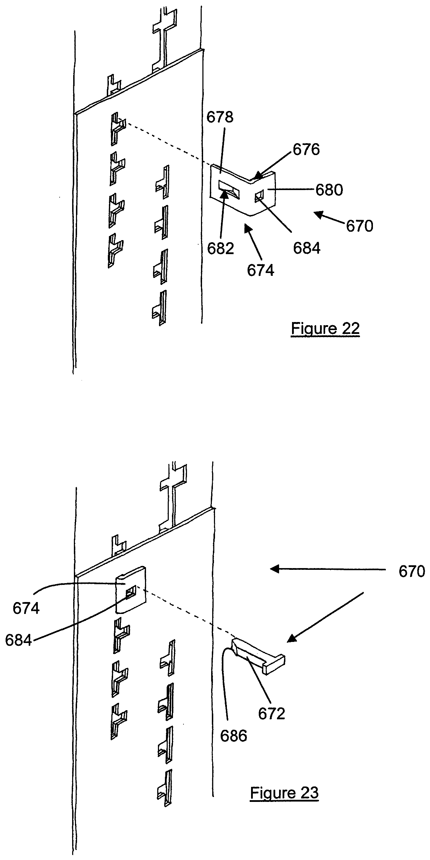

Figures 22 and 23 illustrate an exemplary variation of the pin connector assembly of Figure 5 comprising a single pin connector and a single pin bracket;

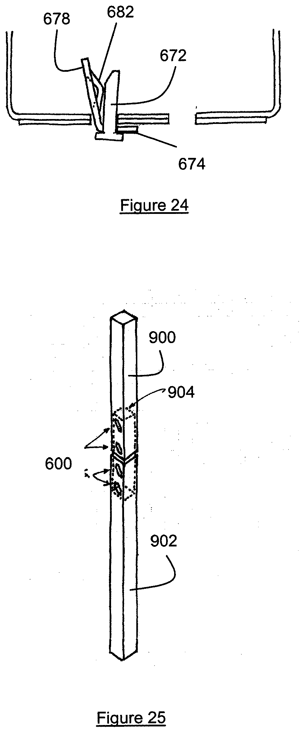

Figure 24 shows how the single pin connector and the single pin bracket form a wedge;
Figure 25 illustrates the use of pin connector assemblies of Figure 5 for connecting two stiffeners in an end-to-end relationship;

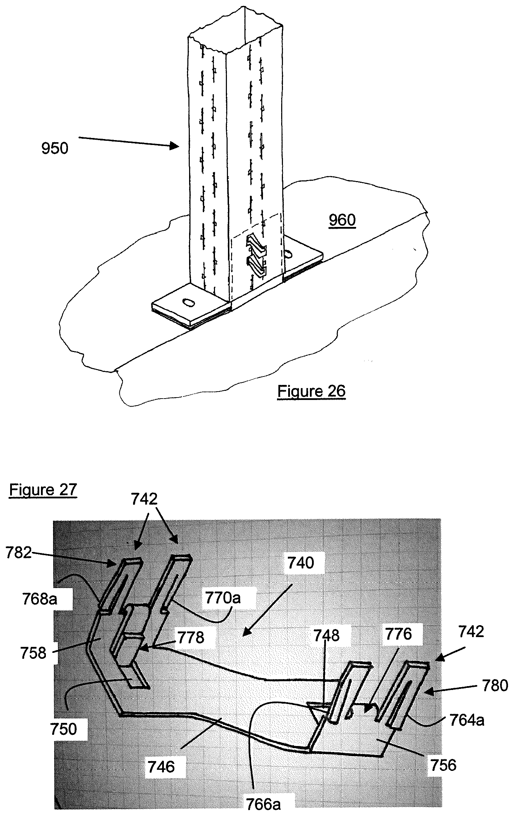

Figure 26 illustrates the support apparatus of Figure 1 being used as a post;
Figure 27 illustrates a connector according to the present invention from a front view in the form of a connector bracket which has a self-locking mechanism;

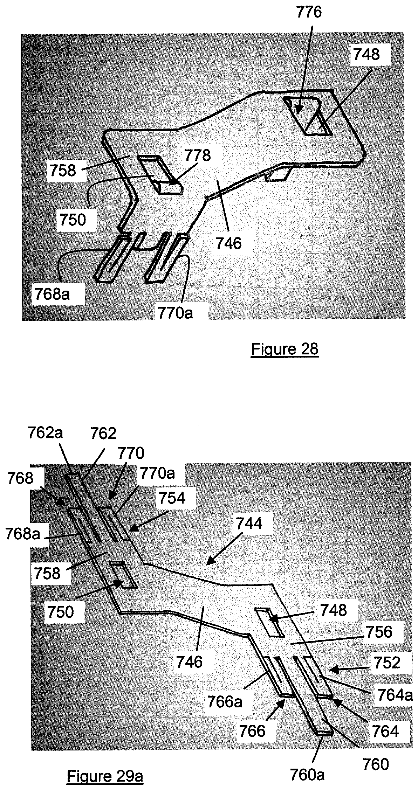

Figure 28 illustrates the connector bracket from a rear view;
Figures 29a to 29d illustrate simplified process steps to make the connector bracket of Figures 27 and 28, and Figure 29e illustrates the self-locking mechanism of the connector bracket of Figures 27 and 28;

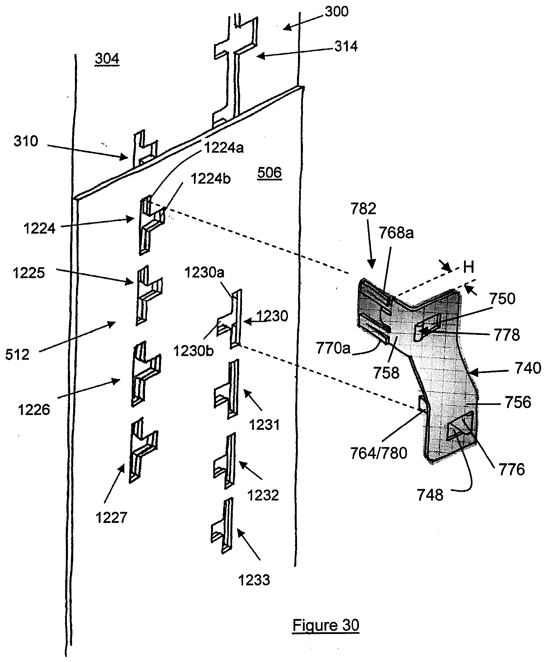

Figure 30 illustrates how the connector bracket of Figures 27 and 28 may be used with the arrangement of Figures 10 and 11; and

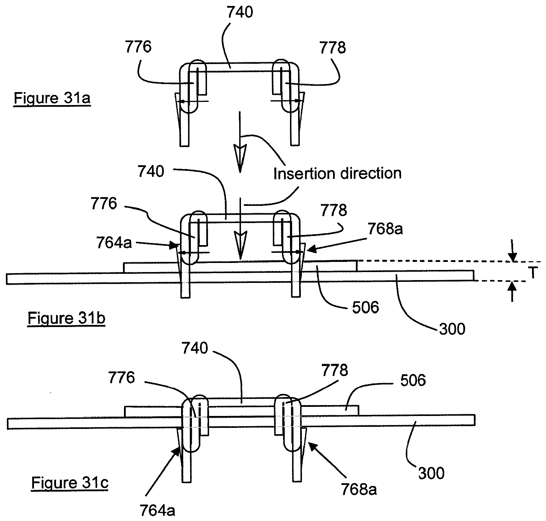

Figures 31a to 31c are simplified cross sectional views of Figure 30 to illustrate how the connector bracket connects with the arrangement of Figure 30.

### Detailed Description of Preferred Embodiments

Figure 1 is a perspective view of a support apparatus 100 configured as a hanger assembly 102. The hanger assembly 102 includes a hanger end plate assembly 200 mounted to an upper supporting structure 104 such as a ceiling or roof, and connected to a vertical stiffener 300 in order to suspend the vertical stiffener 300 from the supporting structure 104. The hanger system 102 further includes two horizontal stiffeners 400,402 with a respective end coupled to the vertical stiffener 300 via a corresponding load bearing connector 500,502. With such an arrangement, the hanger system 102 may be used where walling requires vertical and horizontal support above windows or other forms of opening which spans a distance. As shown in Figure 1, the hanger system 102 is configured to "hang" from the upper structure 104 with sufficient strength to carry weight of a wall constructed between the horizontal stiffeners 400,402 and the upper structure 104. Further, connections between the vertical stiffener 300 and the hanger end plate assembly 200, the vertical stiffener 300 and the two horizontal stiffeners 400,402, the wall to be constructed and the hanger system 102 should be sufficiently strong and secure to achieve cantilever action from the supporting structure 104 to resist horizontal loads (eg. wind pressure) applied to the wall to be constructed and top part of the window or other forms of opening. Components of the hanger system 102 will be described in detail next, including the various connections in order to appreciate how the hanger system 102 is able to address these aims.

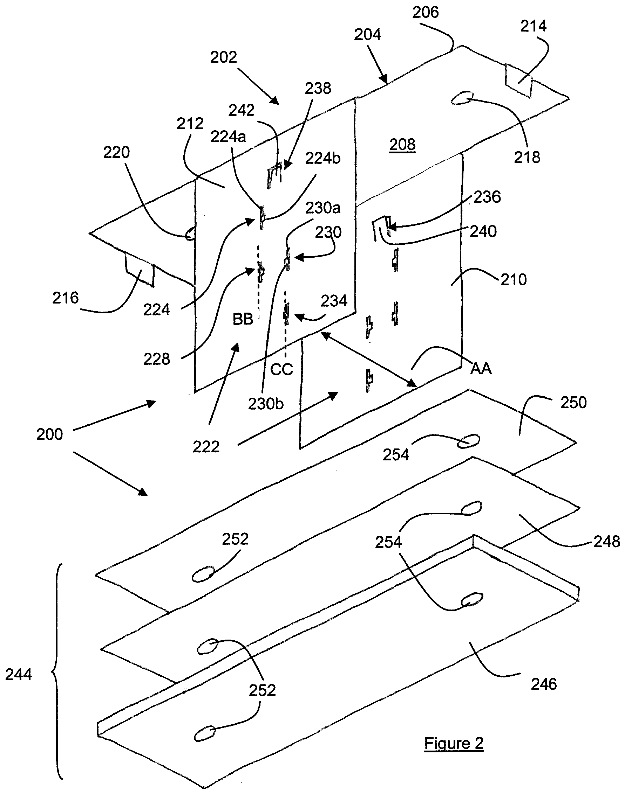

Figure 2 is an exploded perspective view of the hanger end plate assembly 200 of Figure 1. The hanger end plate assembly 200 includes a hanger connector plate 202 having a substantially flat connector primary plate 204 with an outer planar surface 206 for contacting against the upper support structure 104, and an inner planar surface 208. The connector primary plate 204 further includes a first side leg portion 210 and a second side leg portion 212 integrally formed with the connector primary plate 204. The first and second side leg portions 210,212 extend linearly from a respective edge of the connector primary plate 204 so that both side leg portions 210,212 are adjacent to the inner planar surface 208, opposite of each other and spaced apart at a separation distance AA.

The hanger connector plate 202 further includes end stoppers in the form of bent lugs 214,216 extending inwardly of the inner planar surface 208 and from a respective end of the connector primary plate 204. The hanger connector plate 202 also includes two primary plate attachment holes 218,220 spaced apart of each other, with each hole 218,220 positioned near to a respective bent lug 214,216.

Each side leg portion 210,212 has an arrangement of engagement members 222 and in this embodiment, the arrangement of engagement members 222 of both side leg portions 210,212 are similar and thus, one of the side leg portion 212 will be used to elaborate on the engagement members 222.

As shown in Figure 2, the arrangement of engagement members 222 is arranged as first column engagement perforations 224,228 and second column engagement perforations 230,234 with the engagement perforations 224,228 of one column being offset from the engagement perforations 230,234 of the other column. Each engagement perforation 224,228,230,234 is similar in structure and using a first one 224 of the first column engagement perforations, the engagement perforation 224 includes an elongate slot 224a and a centre opening 224b to form a generally T-shape engagement perforation 224. Similarly, the second column engagement perforations 230,234 also has a similar structure, and looking at the first one 230, it also has an elongate slot 230a and a centre opening 230b. From Figure 2, it can be appreciated that the centre openings 224b,230b of the first column engagement perforations 224,228 and the second column engagement perforations 230,234 are arranged to face inwardly, diagonally opposite of each other, and the elongate slots 224a of the first column engagement perforations 224,228 extend along a first linear axis BB and the elongate slots 230a of the second column engagement perforations 230,234 extend along a second linear axis CC. Specifically, the first column engagement perforations 224,228 are offset from the second column engagement perforations 230,234 to form corresponding pairs of engagement perforations with the engagement perforations within the same pair being offset from each other. More specifically, the first one of the first column engagement perforation 224 forms a first pair of engagement perforations 224,230 with the first one of the second column engagement perforation 230. Similarly, the second ones of the respective first and second column engagement perforations 228,234 form a second pair of engagement perforations 228,234.

In this embodiment, the amount of offset between the engagement perforations of each pair of engagement perforations is 50mm (taking the first pair 224,230 as an example, this is measured between the centre openings 224b,230b in a direction parallel to BB or CC).

Each side leg portion 210,212 also includes a side leg portion retainer 236,238 integrally formed with the side leg portions 210,212. In this embodiment, the side leg portion retainers 236,238 are formed on the side leg portion 210,212 at a distance and near to the connector primary plate 204 by cutting along three sides to form respective rectangular lugs 240,242 pivoted at one side and the rectangular lugs 240,242 are forced or bent inwardly to point towards the inner planar surface 208 to form the side leg portion retainers 236,238 which are also resiliently biased in view of the pivotal connection.

The hanger end plate 200 also includes a number of support plates 244 of various thicknesses but they have similar widths and lengths. Indeed, the widths of the support plates 244 may vary slightly in order for the end profiles of the support plates 244 to follow the integral connection between the connector primary plate 204 and the first side and second side leg portions 210,212. In this embodiment, the number of support plates 244 includes a main structural plate 246, a primary packer plate 248 and a secondary packer plate 250. Each of the support plates 246,248,250 has two support plate attachment holes 252,254 which are in registration with corresponding ones of each respective support plate 246,248,250, and also in registration with the respective primary plate attachment holes 218,220 when the support plates 246,248,250 are assembled to the hanger connector plate 202.

To assemble the support plates 246,248,250, they are inserted between the two opposing side leg portions 210,212 and pushed past the two side leg portion retainers 236,238 (which causes the side leg portion retainers 236,238 to flex outwardly to allow the support plates 246,248,250 through) and once the support plates 246,248,250 are clear of the side leg portion retainers 236,238, the side leg portion retainers 236,238 flexes or biases inwardly to retain the support plates 246,248,250 in position and against the inner planar surface 208, as shown in Figure 1. It should be appreciated that the lengths of the support plates 246,248,250 are also adapted to match the lengths of the connector primary plate 204 and thus, the bent lugs 214,216 together with the side leg portion retainers 236,238 are used to retain the support plates 246,248,250 in place. Masonry anchors or similar fasteners are then inserted into the support plate attachment holes 252,254 and the primary plate attachment holes 218,220 in order to secure the hanger end plate assembly 200 to the upper support structure 104.

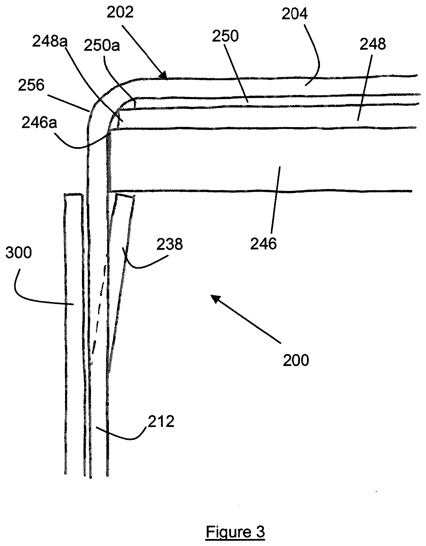

Figure 3 is a partial cross sectional view in a direction D-D of the support apparatus 100 of Figure 1 to show the assembly of the hanger end plate assembly 200 more clearly. It should be appreciated that the hanger connector plate 202 may be formed from a single piece of metal sheet (for example of 2.5mm thickness), cut and the two side leg portions 210,212 bent in place with respect to the connector primary plate 204 (similarly, the side leg portion retainers 236,238 and the pairs of engagement perforations 224,230;228,234 are all integrally formed without any welding). Figure 3 shows a bend 256 between the connector primary plate 204 and one of the side leg portions 212. Radius of curvature of the bend 256 needs to be tightly controlled since if the bend 256 is excessively curved, this may cause a fracture and thus, reduce the strength of the hanger connector plate 202.

In this respect, geometries of the support plates 246,248,250 are controlled or adapted to ensure that the bend 256 are maintained at a suitably large radius so as not to compromise the strength of the hanger connector plate 202 during load applications. In this respect, it can be appreciated that widths of the support plates 246,248,250 vary slightly so that when the support plates 246,248,250 are stacked, edges 246a,248a,250a of each support plate 246,248,250 engages respective parts of the bend 256 in order to control the radius of the curvature. Specifically, in this embodiment, the thickness of the support plates 246,248,250 also vary, with the main structural plate 246 thicker than the primary packer plate 248, and the primary packer plate 248 thicker than the secondary packer plate 250 in order to create gradual staggered steps created by the edges 246a,248a,250a of the support plates 246,248,250.

The main structural plate 246 should be of sufficient thickness to transfer cantilever actions from the vertical stiffener 300 to the upper support structure 104. For example, thickness of the main structural plate 246 may be about 16mm to 25mm, and it may vary depending on the size of the hanger end plate assembly 200. It should also be appreciated that the highly stressed connection between the vertical stiffener 300 and the main structural plate 246 is achieved using components which are easily manufactured and assembled, and as a result, eliminates any welding for the support apparatus 100. Indeed, as welding is eliminated, pre-galvanised steel may be used for all the components of the support apparatus 100 and no subsequent surface treatment may be necessary (which would otherwise be needed to reduce corrosion of the steel because welding damages the galvanized coating). Also, the support apparatus is suitable for standardized components to be held in stock and assembled at short notice to suit typical orders. This is hard to achieve if welding is used since that would mean that the length of the vertical stiffener 300 needs to be known before fabrication may economically proceed.

As shown in Figure 1, the hanger end plate 200 allows the vertical stiffener 300 to cantilever down from the upper structure 104 and thus, the vertical stiffener 300 is connected to the hanger end plate assembly 200.

The vertical stiffener 300 has four side walls to form a substantially rectangular hollow box section and two side walls 302,304 are shown in Figure 1 (with the other two side walls only partly shown at the bottom of the vertical stiffener 300). It should be apparent that the structure of each of the four side walls is similar to each other and thus, only a first side wall 302 will be elaborated.

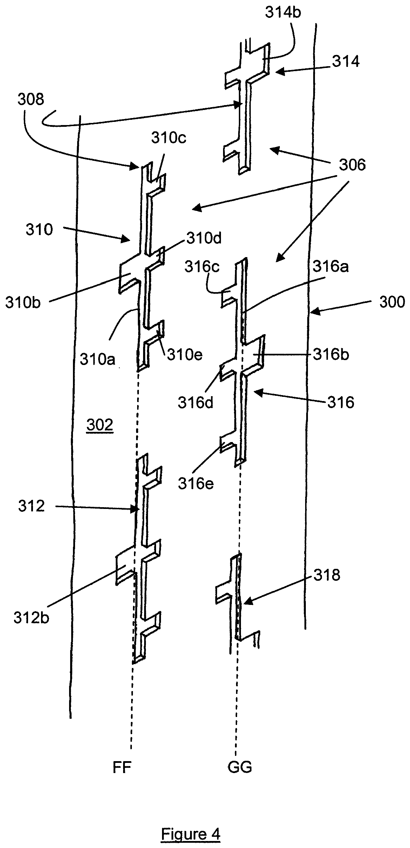

Figure 4 is an enlarged view of portion EE of the support apparatus 100 of Figure 1 to show a portion of the first side wall 302 of the vertical stiffener 300 more clearly. The first side wall 302 includes a plurality of side wall engagement members 306 disposed at discrete positions along the first side wall 302, and in this embodiment, the side wall engagement members 306 are in the form of side wall engagement perforations 308 arranged along two substantially parallel axes FF and GG and for ease of reference, the engagements perforations 308 along the first axis FF, would be termed first axis engagement perforations 310,312 and the engagement perforations 308 along the second axis GG would be termed second axis engagement perforations 314,316,318. It should be apparent from Figure 4 that the first axis engagement perforations 310,312 are offset from the second axis engagement perforations 314,316,318.

Referring to the first one 310 of the first axis engagement perforations in Figure 4 (termed the "first perforation"), the first perforation 310 includes an elongate slot 310a extending along and aligned to the first axis FF, and a number of recesses projecting from the elongate slot 310a. Specifically, the first perforation 310 includes a main recess 310b disposed around the centre of the elongate slot 310a and projecting outwardly of the first side wall 302 of the vertical stiffener 300 along a first direction substantially perpendicular to the first axis FF. The first perforation 310 further includes three secondary recesses 310c,310d,310e spaced apart at about 25mm from each other and projecting inwardly of the first side wall 302, in a second direction which is opposite of the first direction, from the elongate slot 310a. Specifically, a first secondary recess 310c is located near one end of the slot 310a, a second secondary recess 310d is disposed near the centre of the slot 310a directly opposite of the main recess 310b, and a third secondary recess 310e is disposed at the other end of the slot 310a.

It should be appreciated that each of the first axis engagement perforations 310,312 have a similar configuration and orientation as the first perforation 310 described above, and whereas the second axis engagement perforations 314,316,318 also have a similar structure as the first perforation 310 but in a different orientation. Specifically, using the middle one 316 of the second axis engagement perforations 314,316,318 as an example (termed "middle perforation"), the middle perforation 316 has an elongate slot 316a, a main recess 316b and three secondary recesses 316c,316d,316e arranged in a similar structure but orientation of the main recess 316b and the three secondary recesses 316c,316d,316e are different. As illustrated in Figure 4, the main recess 316b is orientated to face the second direction (i.e. same as the secondary recesses 310c,310d,310e of the first perforation 310) whereas the three secondary recesses 316c,316d,316e are oriented to face the first direction (i.e. similar to the main recess 310b of the first perforation 310). In other words, the three secondary recesses 310c,310d,310e and the three secondary recesses 316c,316d,316e face each other, although diagonally in view of the offset. It should be appreciated that the third secondary recess 310e of the first perforation 310 is in line with the first secondary recess 316c of the middle perforation 316.

With the configuration of the engagement perforations 308, the vertical stiffener 300 may then be mounted to the hanger end plate 200 using connector such as pin connector assemblies 600 shown in Figure 1. An enlarged unassembled view of the pin connector assembly 600 is shown in Figure 5. The pin connector assembly 600 includes a double pin connector 602 and a double pin connector bracket 604.

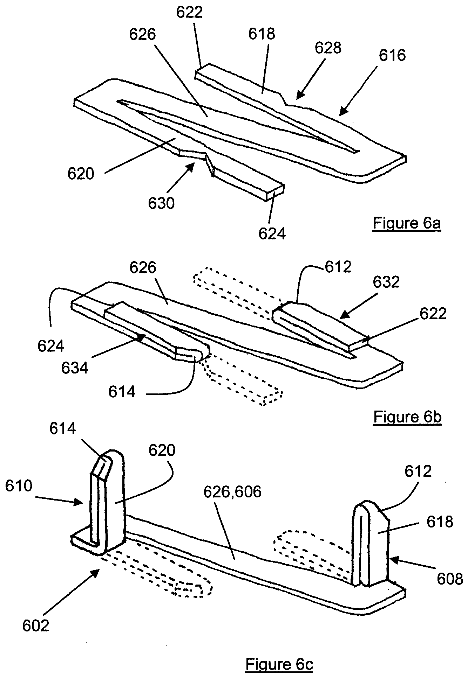

The double pin connector 602 includes an elongate pin body 606 and two upstanding or projecting abutment pins 608,610 at each end of the pin body 606 with a respective slightly tapered abutment surface 612,614 at the end of the respective abutment pin 608,610. Figures 6a, 6b and 6c illustrate the forming of the double pin connector 602 using progressive punching. Figure 6a illustrates a preformed pin connector structure 616 cut from a sheet of metal, such as steel, of a desired thickness. The preformed pin connector structure 616 includes two elongate arms 618,620 with free ends 622,624 facing in opposite directions and connected to an elongate body 626 to form a generally N-shape structure. The preformed pin connector structure 616 also includes a V-shaped notch 628,630 formed at a predetermined location along the respective elongate arms 618,620 with opening of the V-shape notch 628,630 facing outwards.

The preformed pin connector structure 616 is next bent at the V-shape notch 628,630 of the elongate arms 618,620 by folding the respective free end 612,614 inwardly to form respective folded elongate arms 632,634, which also forms the respective tapered abutment surface 612,614, as shown in Figure 6b. Next, the folded elongate arms 632,634 are bent adjacent to the respective free ends 622,624 to create the upstanding abutment pins 608,610 which are substantially perpendicular relative to the elongate body 626 which forms the elongate pin body 606, as shown in Figure 6c. In this way, the double pin connector 602 is formed.

Coming back to Figure 5, the double pin connector bracket 604 may be formed in a similar manner as the double pin connector 602 using progressive punching, and thus, no further elaboration is needed.

The double pin connector bracket 604 is formed from a single sheet of metal and bent at designated locations to form a generally C-shape bracket body 636 having a substantially planar main bracket body 638 with two bracket legs 640,642 extending from the main bracket body 638 substantially perpendicular. It should be appreciated that one of the bracket legs 640 is offset from the other bracket 642 in a similar way as the first axis engagement slots 310,312 and second axis engagement slots 314,316,318. Each bracket leg 640,642 includes a protruding engagement element and in this embodiment, the protruding engagement element is in form of a raised ridged strip 644,646 which creates a kink 648,650. It should be appreciated that both ridged strips 644,646 of the bracket legs 640,642 face each other. The double pin bracket 604 also includes two pin openings 652,654 (although one of the pin openings 654 cannot be seen from Figure 5) formed on the main bracket body 638 adjacent the respective bracket legs 640,642 and where the bracket legs 640,642 meet the main bracket body 638. The raised ridged strips 644,646 are arranged to occlude or at least partially block the respective two pin openings 652,654.The pin openings 652,654 are adapted to match the abutment pins' profile and thus, the pin openings 652,654 are square or rectangular. It should be apparent that the ridged strips 644,646 are suited for progressive punching but the protruding element may adopt other geometries, especially if other manufacturing process is used.

The pin connector assembly 600 has various uses and is used to attach the vertical stiffener 300 to the hanger end plate 200 in a similar way as the load bearing connectors 500,502 (and thus, the horizontal stiffeners 400,402) are attached to the vertical stiffener 300. Thus, an explanation of how the attachment or connection is carried out will be discussed later.

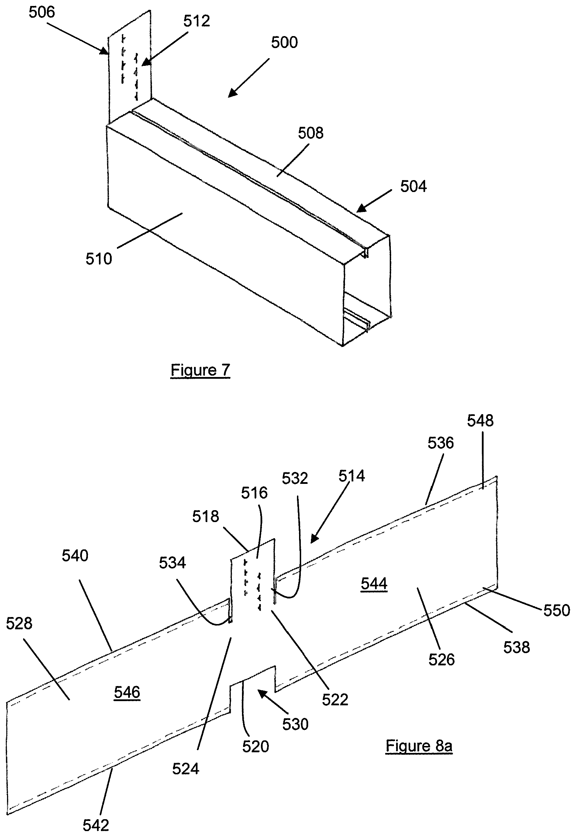

Figure 7 is a perspective view of one of the load bearing connectors 500 including a sleeve member 504 integrally formed with a connecting plate 506 as a unitary structure. The sleeve member 504 is formed by two opposing arm members 508,510 arranged to be insertable into the horizontal stiffener 400 for transferring loads applied to the horizontal stiffener 400 to the sleeve member 504 and hence to the connecting plate 506. The connecting plate 506 is connectable to the vertical stiffener 300 for transferring the load from the sleeve member 504 to the vertical stiffener 300. Specifically, the connecting plate 506 includes connecting plate engagement members 512 which are similar to the engagement members 222 of Figure 2 (i.e. engagement slots) and thus, no further elaboration will be needed.

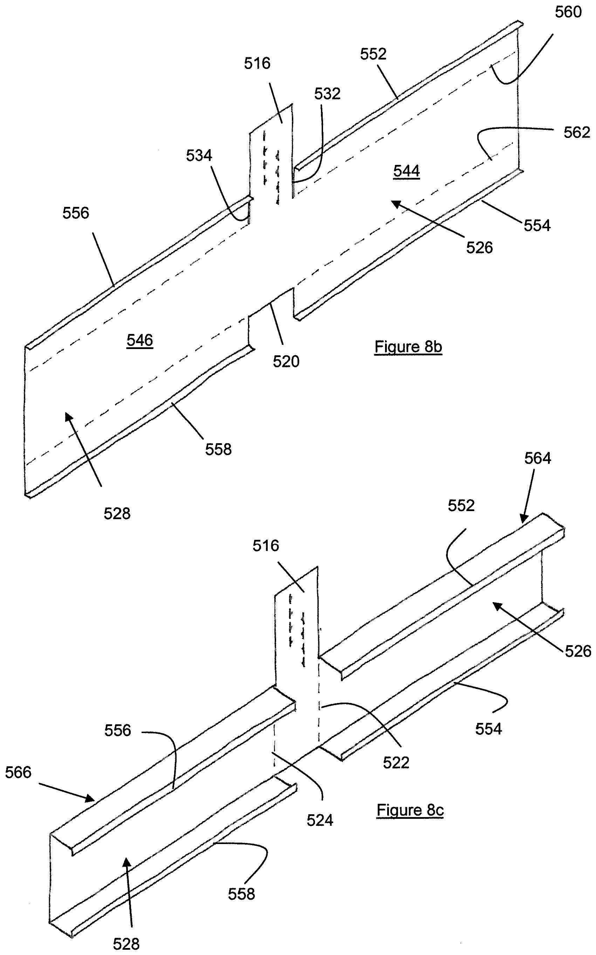

Figures 8a, 8b and 8c illustrate the forming of the load bearing connector 500, also by progressive punching. Figure 8a illustrates a preformed load bearing structure 514 cut as part of the progressive punching process from a sheet of metal such as steel, of a desired thickness. The preformed load bearing structure 514 includes a centre plate 516 (with the connecting plate engagement members 512 already formed), substantially rectangular with a first end 518, a second end 520, and sides 522,524. The preformed load bearing structure 514 includes two wing plates 526,528 extending longitudinally from the respective sides 522,524 of the centre plate 516. As shown in Figure 8a, the first end 518 of the centre plate 516 is raised beyond the wing plates 526,528 but the second end 520 of the centre plate 516 sits inside the wing plates 526,528 to create a load bearing structure opening 530. The preformed load bearing structure 514 also includes two parting line gaps 532,534 along the sides 522,524 which stop at a certain dimension and do not extend along the entire sides 522,524 of the centre plate 516 to enable the wing plates 526,528 to be integrally joined to the centre plate 516.

Next, edges 536,538,540,542 of the wing plates 526,528 are folded inwardly at roughly right angles to wing plate bodies 544,546 of the wing plates 526,528 along first folding lines 548,550 shown in Figure 8a and adjacent the respective edges 536,538,540,542, to form lips 552,554,556,558 along the longitudinal axis of the wing plates 544,546 as shown in Figure 8b.

The wing members 526,528 are further folded inwardly and along second folding lines 560,562 which correspond to the depth of the parting line gaps 532,534 and second end 520 of the centre plate 516 respectively to form a pair of lipped channels 564,566, as shown in Figure 8c. Next, the pair of lipped channels 564,566 are brought towards each other by bending the wing plates 526,528 along the sides 522,524 of the centre plate 516 to bring the lips 556,558 into contact with respective opposing lips 552,554 and which effectively forms a box-shaped structure which forms the sleeve member 504 (and the pair of lipped channels 564,566 thus forms the two opposing arm members 508,510) shown in Figure 7.

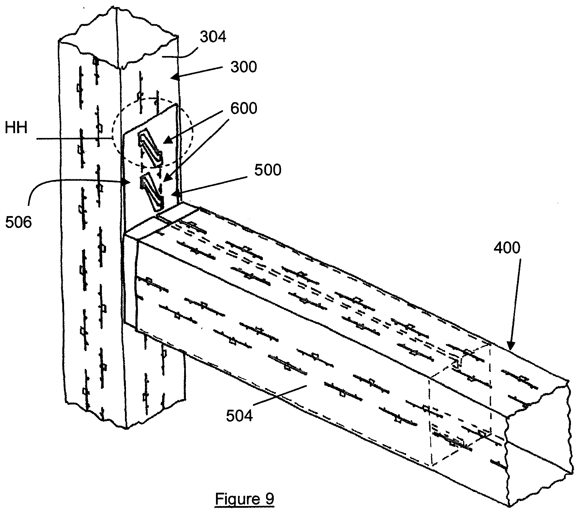

To use the load bearing connector 500, the sleeve member 504 is inserted into the horizontal stiffener 400 in order to attach the horizontal stiffener to the vertical stiffener and which makes the effective length of the horizontal stiffener adjustable (telescopically). This is carried out by attaching the connecting plate 506 to vertical stiffener 300 using two pin connector assemblies 600 as shown in Figure 9, which is a closed up view of the connection between the horizontal stiffener 400 and the vertical stiffener 300 of Figure 1 at the second side wall 304. To explain the use of the two pin connector assemblies 600, reference is made to Figure 10 which is an enlarged view of portion HH of Figure 9, but before coupling of the two pin connector assemblies 600. For the sake of simplicity, reference is also made to Figure 4 which shows a part of the first side wall of the vertical stiffener but since the second side wall 304 has also the same structure, the same references will be used.

The connecting plate 506 includes the engagement members 512 which are similar in structure (four engagement perforations in two columns- with engagement perforations 1224,1225,1226,1227 in one column, and the other column showing four engagement perforations 1230,1231,1232,1233) as the engagement members 222 of the hanger connector plate 202 (refer to figure 2), and thus, the similar references will be used with an addition of 1000.

To attach the connecting plate 506 securely to the vertical stiffener 300, a user holds the load bearing connector 500 against the second side wall 304 of the vertical stiffener 300 and registers the first one 1224 of the first column engagement perforations with one of the first axis engagement perforations 310,312 and similarly the first one 1230 of the second column engagement perforations with one of the second axis engagement perforations 314,316,318 of the second side wall of the vertical connector. In this case, the user registers the centre opening 1224b of the first one 1224 of the first column engagement perforations with the second secondary recess 310d (not shown in Figure 10) of the first perforation of the first axis engagement perforation 310 and similarly, the elongate slot 1224a is registered or aligned with the elongate slot 310a of the first perforation 310. Similarly, the user aligns the centre opening 1230b of the first one 1230 of the second column engagement perforations with the second secondary recess 316d of the middle perforation 316 of the second axis engagement perforations and likewise, the elongate slot 1230a is also aligned with the elongate slot 316a of the middle perforation 316. The registration and alignment of the various perforations, recesses and openings thus creates respective aligned perforations.

Next, the pin connector assembly 600 is used to couple the connecting plate 506 (and thus, the load bearing connector 500) to the vertical stiffener 300. As shown in Figure 10, the bracket leg 640 is adapted to slide or insert into the elongate slot 1224a and elongate slot 310a which are in registration with each other, and the ridged strip 644 is inserted through the centre opening 1224b and the second secondary recess 310d. At the same time, the other bracket leg 642 is also inserted into the elongate slot 1230a and the elongate slot 316a with the ridged strip 646 inserted through the centre opening 1230b and the second secondary recess 316d of the middle perforation 316. It should be appreciated that the pin connector assembly 600 is insertable selectively into any of the corresponding secondary recesses 310c/316c, 310e/316e and not just the second secondary recesses 310d,316d.

Figures 13 and 14 are sectional plan views in a direction J-J of Figure 11, showing before insertion of the double pin bracket 604, and after inserting the double pin bracket 604 into the slots and recesses of the connecting plate 506 and the vertical stiffener 300 i.e. Figure 13 corresponds with Figure 10, and Figure 14 corresponds with Figure 11.

The double pin connector 602 of the connector pin assembly 600 is next positioned with the one of the abutment pins 608 aligned with one of the pin openings 652, and the other abutment pin 610 aligned with the other pin opening 654 of the double pin bracket 604. Next, the abutment pins 608,610 of the double pin connector are forced into the respective pin openings 652,654 using a mallet or similar instrument capable of applying impact. As the abutment pins 608,610 are forced in, the tapered abutment surfaces 612,614 engages the corresponding sloped ridged strips 644,646 and this is shown more clearly in Figure 15, which is a sectional plan view similar to Figure 13 but corresponds to the partial insertion of the abutment pins 608,610 into the pin openings 652,654. As the abutment pins 608,610 are forced further into the pin openings 652,654, the ridged strips 644,646 provides resistance, forcing the bracket legs 640,642 and the abutment pins 608,610 to distort slightly, forming a wedge connection between the ridged strips 644,646 and the abutment pins 608,610. Figure 12 illustrates a proper connection between the double pin bracket 604 and the double pin connector 602 and this is also illustrated in Figure 16, which is a sectional plan view similar to Figure 15 but Figure 16 corresponds to Figure 12.

Specifically, it should be appreciated that the wedge connection includes the kinks 648,650 engaging the respective abutment pins 608,610 and comparing Figure 16 with Figure 15, it should be appreciated that the bracket legs 640,642 are forced slightly outwards, whereas the abutment pins 608,610 are slightly forced inwards to form the wedge connection. Thus, the distorted bracket legs 640,642 in cooperation with the abutment pins 608,610 forms a locking mechanism to fasten the connecting plate 506 (and thus, the load bearing connector 500) and the vertical stiffener 300 together. The wedge connection increases the contact between the double pin connector 602, the double pin bracket 604 and the engagement members 310,316, enabling loads in any direction to be transferred between the mating horizontal stiffener 400, the load bearing connector 500 and the vertical stiffener 300.

To increase the effectiveness of the load transfer, Figure 9 illustrates that another connector pin assembly 600 is used to connect the loading bearing connector 500 to the vertical stiffener 300, and the same procedure as explained above applies. Since it is preferred to have two connector pin assemblies 600 (i.e. a pair) for a more effective connection and load transfer, providing the two columns of four engagement perforations each 1224,1225,1226,1227/1230,1231,1232,1233 allows adequate spacing between the two connector pin assemblies 600. Also, in this embodiment, due to the spacing between the engagement perforations 1224,1225,1226,1227 of the first column perforations (and similarly between the engagement perforations 1230,1231,1232,1233 of the second column perforations) and the first axis engagement perforations 310,312 (and the second axis engagement perforations 314,316,318), the pair of connector pin assemblies 600 are spaced apart by two first column and second column perforations of the connecting plate 506, as shown in Figure 9.

It should be mentioned that the connection of the load bearing connector 500 to the vertical stiffener 300 using the connector pin assemblies 600 is offset from the centre of the horizontal stiffener 400. As a result, any horizontal loads would tend to make the connection "twist" due to the offset so that the pair of connector pin assemblies 600 reduces or prevents such twisting action. In the same manner, using the double pin assemblies 600, the hanger end plate 200 is connected securely to the vertical stiffener as shown in Figure 1. Specifically, the double pin assemblies are inserted into the side wall engagement members 306 and the engagement members 222 of the first side leg portion 210 (and into the second side leg portion 212) to achieve a secured connection and at the same time, maximizes the contact between all the mating components for effective load transfer.

Since the load bearing connector 500 illustrated in Figure 7 is integrally formed from a single sheet of metal, no welding is necessary. Indeed, the load bearing connector 500 may be manufactured using a fully automated progressive punching process, which involves punching and folding of a sheet or roll of steel plate to form the final part, as described earlier. Also, the sleeve member 504 is able to slide within the horizontal stiffener 400 and thus, provides for horizontal tolerance. In terms of the vertical tolerance, separation distance between engagement perforations 1224,1225,1226,1227 (or 1230,1231,1232,1233) is 25mm i.e. the engagement perforations are disposed at discrete positions by 25mm increments.

As mentioned earlier, the hanger assembly 102 may be used to support a wall above a window for example. As an example, the wall may be made of masonry and thus, the masonry needs to be tied to the vertical stiffener 300 to achieve the support. In this embodiment, a T-tie member 700 is proposed and this is shown in Figure 17.

The T-tie member 700 comprises a relatively flat tie body 702 and opposing plate extensions 704,706 to form a general T-shape relative to the tie body 702. Specifically, it may be regarded that the tie body 702 extends horizontally along a longitudinal axis, and the opposing plate extensions 704,706 extend vertically relative to the longitudinal axis. Further, the T-tie member 700 includes three projecting lugs 708,710,712 which are created by bending legs which extend out at predetermined positions of the opposing plate extensions 704,706 at specific angles and dimensions. The first and third projecting lugs 708,712 are disposed at ends of and substantially perpendicular to the opposing plate extensions 704,706 and extend in a direction opposite to the second projecting lug 710, which is disposed nearly or substantially equally between the first and third projecting lugs 708,712 and near the tie body 702. In this way, any load applied to the tie body 702 is distributed nearly equally or relatively evenly spread to each of the three lugs 708,710,712.

The T-tie member 700 further includes two elongate troughs 714,716 spaced apart and parallel to each other which create opposing raised ridges on the underside of the tie body 702. The elongate troughs 714,716 may increase stiffness and improve load transfer to cement work between bricks or construction blocks. Each plate extension 704,706 also includes a plate extension trough 718,720 with a corresponding ridge portion 722,724, which is similar to the elongate troughs 714,716 on the tie body 702. However, the ridge portions 722,724 of the plate extensions 704,706 extend in opposite directions with the ridge portion 722 of the first plate extension 704 pointing away from the tie body 702, whereas the ridge portion 724 of the second plate extension 706 points towards the tie body 702. It should also be appreciated that the elongate troughs 714,716 are roughly aligned with the plate extension troughs 718,720 along respective longitudinal axes.

To use the T-tie member 700, the tie body 702 is inserted between the wall material such as cement of the masonry wall (with the elongate troughs 714,716 embedded in the cement), and the projecting lugs 708,710,712 are engaged with side wall engagement members of the vertical stiffener 300. In relation to Figure 1, the T-tie member 700 would be engaged with the second side wall 304 as the wall would be constructed above the horizontal stiffener 400. However, for ease of explanation, reference will be made to the first side wall 302 of Figure 4 and it would be apparent that the same explanation applies to the second side wall 304.

The T-tie member 700 is constructed to match the profile of the engagement perforations 308 (along axes FF,GG) and as an example, the first and third projecting lugs 708,712 are arranged to be inserted into and engaged with main recesses 314b and 316b of two of the second axis engagement perforations 314,316 respectively, with the second projecting lug 710 arranged to be inserted into and engaged with the main recess 310b of the first one 310 of the first axis engagement perforations. It should be appreciated that the T-tie member is thus engaged within the elongate slots 310a, 314a, 316a. Vertical movement of the T-tie member 700 along the elongate slots 310a,314a,316a allows it to be aligned with bedding joints of the wall material. It should be appreciated that the T-tie member 700 may be rotated 180 degrees (referring to Figure 17, the elongate troughs 714,716 would face below) with the first and third projecting lugs 708,712 now arranged to engage with the main recesses 310b,312b of the first axis engagement perforations 310,312, whereas the second projecting lug 710 would be arranged to engage the main recess 316b of the middle perforation 316 of the second axis engagement perforations. In this way, a full range of positions along the entire length of the vertical stiffener 300 may be achieved.

As it can be appreciated, the T-tie member 700 is arranged to transfer horizontal loads from the wall material to the support apparatus 100, and in this embodiment, this would be the vertical stiffener 300. With the T-tie member 700, the horizontal tie body 702 is located such that the applied load is distributed nearly equally to each of the projecting lugs 708,710,712 and as a result, the T-tie member 700 is able to withstand suitable load capacities even though the tie body 702 may only have a thickness of around 0.8mm, much lower than other tie members.

With a thinner tie body 702, this minimizes the gap to be provided between the vertical stiffener 300 (and also the horizontal stiffener 400 depending on usage and application) and the load bearing connector 500 (or other sleeve members which extend the effective length of a stiffener). Reducing the gap improves the capacity for load transfer between the load bearing connector 500 (in particular the sleeve member 504) and reduces the potential amount of movement when the load is being transferred.

The T-tie member 700 is also suitable for manufacturing using the progressive punching process, and the T-tie member 700 is preferably integrally formed.

The described embodiments should not be construed as limitative. The various components add to the versatility of the support apparatus and indeed, the components may also be used in other applications. For example, the double pin assembly 600 may be used in combination with a pair of binder connectors 800,850 to bind two stiffeners 360,370 together and one of the binder connectors 800 is shown in Figure 18. The binder connector 800 has a generally S-shape cross-section binder body 802 and made of a thin strip of steel plate bent at specific locations to form the S-shape to define a first connecting portion 804 and a second connecting portion 806 which are opposite to each other and having a common linkage. Specifically, in this embodiment, the binder body 802 includes a first binder section 808 coupled to a second binder section 810 with the second binder section forming a right angle with the first binder section 808, and the second binder section 810 extends into a third binder section 812 which is also perpendicular to the second binder section 810 (and in the same general direction as the first binder section) to form the first connecting portion which is generally C-shape. The third binder section 812 further extends to a fourth binder section 814 in a direction substantially parallel to the second binder section 810 and the fourth binder section 814 further extends to a fifth binder section 816 to form the second connecting portion 806 and it should be appreciated that the third binder section 812 forms the common linkage with the first connecting portion 804. It should be appreciated that the first connecting portion 804 defines a first connecting portion receiving space 818 for receiving about half of the profile of the stiffener, and the second connecting portion 806 (directly adjacent to the first connecting portion 804) defines a second connecting portion receiving space 820 for receiving also about half of the second of the stiffeners but in opposite relationships to each other.

The binder connector 800 further includes a first binder engagement member 822 disposed at the first binder section 808 and a second binder engagement member 824 disposed at the fifth binder section 816. In this embodiment the first binder engagement member 822 and the second binder engagement member 824 are in the form of binder engagement slots which have a similar structure as the first column engagement slots 224,228 or the second column engagement slots 230,234 of the hanger connector plate 202 shown in Figure 2.

To use the binder connectors 800,850, the second binder connector 850 of the pair needs to be rotated in an opposite orientation to the first binder connector 800 as shown in Figure 19. For ease of explanation, the same references will be used for the second binder connector for like parts with the addition of 50. In this respect, the first binder section 858 of the second binder connector 850 would be adjacent to the fifth binder section 816 of the first binder connector 800, and the fifth binder section 866 of the second binder connector 850 would be directly adjacent to the first binder section 808 of the first binder connector 800. In this way, the first binder engagement member 872 of the second binder connector 850 is offset to the second binder engagement member 824 of the first binder connector 800 just like the first column engagement slots 224,228 and the second column engagement slots 230,234 of the hanger connector plate 202. Likewise, the second binder engagement member 874 of the second binder connector 850 is offset in a similar manner to the first binder engagement member 822 of the first binder connector 800.

Figure 20 illustrates the use of the first binder connector 800 and the second binder connector 850 to bind the two substantially identical stiffeners 360,370 which are similar to the vertical stiffener 300 of Figure 1. In other words, each of the two stiffeners 360,370 has four side walls - first side wall 362,372, second side wall 364,374, third side wall 366,376 which are directly opposite of the first side wall 362,372 and fourth side wall 368,378 directly opposite of the second side wall 364,374. The side walls of the stiffeners 360,370 also includes the engagement slots 306 illustrated in Figure 4, but these are not shown in Figure 20 for simplicity. The first binder section 808 of the first binder connector 800 is first placed on the first side wall 362 of the first stiffener 360 and the second binder section 810 then extends across the face of the second side wall 364 and the third binder section 812 extends across and is sandwiched between the third side wall 366 of the first stiffener 360 and the first side wall 372 of the second stiffener 370, and the first binder connector 800 next snakes around the second stiffener 370 with the fourth binder section 814 extending across the fourth side wall 378 of the second stiffener, and finally the fifth binder section 816 ends on the third side wall 376 of the second stiffener 370.

The second binder connector 850 (of similar profile as the first binder connector 800) goes in the opposite orientation with the first binder section 858 placed on the third side wall 376 of the second stiffener 370, and the second binder section 860 of the second binder connector 850 extending across the second side wall 374 of the second stiffener 370, and the third binder section 862 of the second binder connector 850 is similarly sandwiched between the first side wall 372 of the second stiffener 370 and the third side wall 366 of the first stiffener 360. The second binder connector 850 further extends around the first stiffener 360 with the fourth binder section 864 of the second binder connector 850 extending across the face of the fourth side wall 368 of the first stiffener 360 and finally the fifth binder section 866 ends on the first side wall 362 of the first stiffener offset with the first binder section 808 of the first binder connector 800. It can thus be appreciated that the first connecting portion 804 of the first binder connector 800 cooperates with the second connecting portion 856 of the second binder connector 850 and the second connecting portion 806 cooperates with the first connecting portion 854 of the second binder connector to envelope all the side walls of the first and second stiffeners 360,370 and to connect the first and second stiffeners 360,370 in a side-to-side arrangement.

Two pin connector assemblies 600 are next installed to engage the first binder engagement member 872 of the second binder connector 850 and the second binder engagement member 824 of the first binder connector 800, and also the second binder engagement member 874 of the second binder connector 850 and the first binder engagement member 822 of the first binder connector 800 to secure both stiffeners 360,370 together, and similarly secures the first binder connector 800 and the second binder connector 850 to the stiffeners 360,370.

The profile and the opposing orientation of the first and the second binder connectors 800,850 ensures that the two stiffeners 360,370 move together perpendicular to the plane of the wall to be constructed and the two binder connectors 800,850 also tie the two stiffeners 360,370 together for transport or installation purposes. Needless to say, the binding of the two stiffeners 360,370 may also be performed on site. Locating the connector pin assemblies 600 on the stiffeners' 360,370 external side walls 362,376 allows for easy access to secure the two binder connectors 800,850 and avoids significant protrusions on the second and fourth side walls 364,368,374,378 where fire rating may be compromised or finishing could be affected. It should be appreciated that installation of the pin connector assemblies 600 would require the binder connectors 800,850 to be moved along the length of the stiffeners 360,370 so that the binder engagement members register with the engagement slots on the stiffeners 360,370 before the pin connector assemblies 600 may be installed. It should also be appreciated that the binder connectors 800,850 are easy to manufacture and a robust connection with the two stiffeners 360,370 may be achieved without a need for welding or complex installation procedures.

The binder connectors 800,850 may include further binder sections beyond the fifth binder section 816,866 in the event that more than two stiffeners 360,370 need to be bound or connected together.

Figure 21 illustrates a number of pairs of binder connectors 800,850 are used to connect the two stiffeners 360,370 together of substantial height at designated or discrete locations along the length of the stiffeners 360,370. Indeed, such a configuration of two (or more) stiffeners 360,370 being bound together may be used as part of the support apparatus 100, for example, when reinforcing a particular structure.

Further, the pin connector assembly 600 may come in other forms and may not be in the form of the double pin connector 602. For example, the pin connector assembly 600 may include a single pin connector 670 comprising a single projecting abutment pin 672 (see Figure 23) and a single pin bracket 674 (which broadly are half of what is illustrated in Figure 5). With reference to Figure 22, the single pin bracket 674 includes an L-shape bracket body 676 having a single pin bracket leg 678 extending from a single pin bracket body 680. The single pin bracket 674 includes a single pin ridged strip 682 and a single pin opening 684 just like the structure of one side of the double pin bracket 604, with the single pin ridged strip 682 also occluding or at least partially blocking the single pin opening 684. Figure 23 illustrates the single pin connector 670 having the single projecting abutment point 672 and a single pin tapered surface 686 about to be driven into the single pin opening 684 of the single pin bracket 674. Figure 24, on the other hand, illustrates how the single abutment pin 672 is wedged together with the single pin ridged strip 682 and it should be appreciated that the bracket leg 678 and the single abutment pin 672 are slightly distorted or forced apart just like what has been described for the double pin connector 602.

It should be appreciated that the double pin connector 604 may also be substituted with two single pin connectors 670, although this is not preferred as the double pin connector 604 ensures that the user engages both points along the vertical stiffener which makes the connection more secure. It is also envisaged that the double pin connector 604 may make use of two single pin projecting pins 672 (instead of the double pin connector 602) or the double pin connector 602 may be used with two single pin brackets 674.

The pin connector assemblies 600 may also be used to connect two (or more) stiffeners 900,902 together with an end-to-end arrangement, such as that shown in Figure 25 with an inner sleeve 904.

The support apparatus 100 also has other uses, for example, configured as a post assembly 950 having similar components as the hanger assembly 102 but inverted (although the horizontal stiffeners are not shown) and the post assembly 950 is mounted to a floor or lower structure 960 instead of the ceiling or upper support structure. The support apparatus 100 may also come in various configurations. For example, as illustrated in Figure 2, the hanger connector plate 202 of the hanger end plate assembly 200 is substantially perpendicular with respect to the first and second side leg portions 210,212, but this may not be necessarily so. It is envisaged that the hanger connector plate 202 may be formed at an oblique angle with respect to the first and second leg portions 210,212 which may be useful for mounting the hanger connector plate 202 to a sloping ceiling (or floor). In such an arrangement, the support plates 246,248,250 may or may not be used, and if the support plates 246,248,250 are used, they may be configured (size, thickness etc) accordingly.

Instead of using the pin assembles 600 to fasten or couple one component (such as the horizontal stiffeners 400,402) to another component (such as the vertical stiffener 300 using the load bearing connector 500), the connector is, according to the present invention, in the form of a connector bracket 740 with a self-locking mechanism 742 and Figure 27 illustrates the connector bracket 740 from a front view and Figure 28 illustrates the connector bracket 740 from a back view.

The connector bracket 740 is formed from a single sheet of metal and Figures 29a to 29e illustrate the forming of the connector bracket 740 by progressive punching, similar to the pin connector 602. Figure 29a illustrates a preformed bracket structure 744 made by progressive punching from a sheet of metal, such as steel, of a desired thickness. The preformed bracket structure 744 includes a base member 746 having first and second bracket openings 748,750 formed by progressive punching and positioned below respective arm sections 752,754 which extend from opposite ends of the base member 746 and in opposite directions.

Each of the arm sections 752,754 has a neck portion 756,758 which is common to and joins a finger member 760,762 and two side arms 764,766,768,770 with the finger member 760,762 arranged between respective side arms 764,766,768,770. Each of the side arms include slits to create separable side arm members 764a,766a,768a,770a.

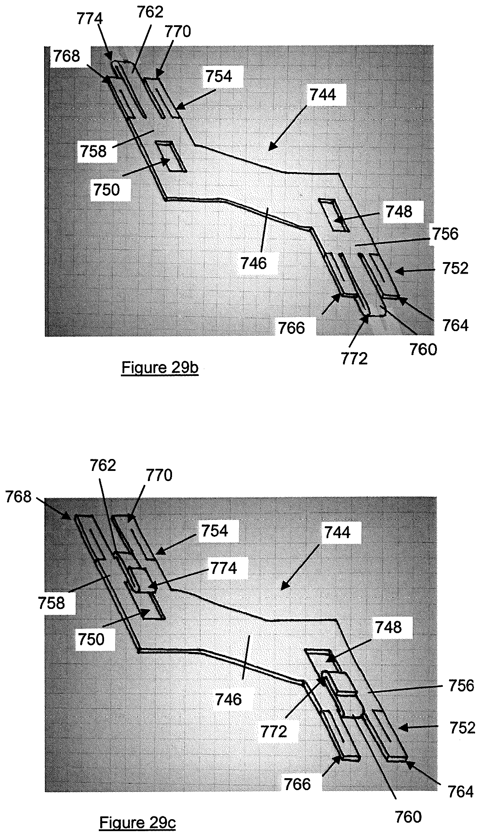

The finger members 760,762 extend longer than the side arms 764,766,768,770 and as a first step, ends 760a,762a of the finger members are folded outwards onto itself at a predetermined distance from the ends 760a,762a to form a respective first fold 772,774 as shown in Figure 29b. Next, the finger members 760,762 are folded inward near a line adjoining the neck portion 756,758 so that the first fold 772,774 extends into the respective openings 748,750 of the preformed bracket structure 744, as shown in Figure 29c.

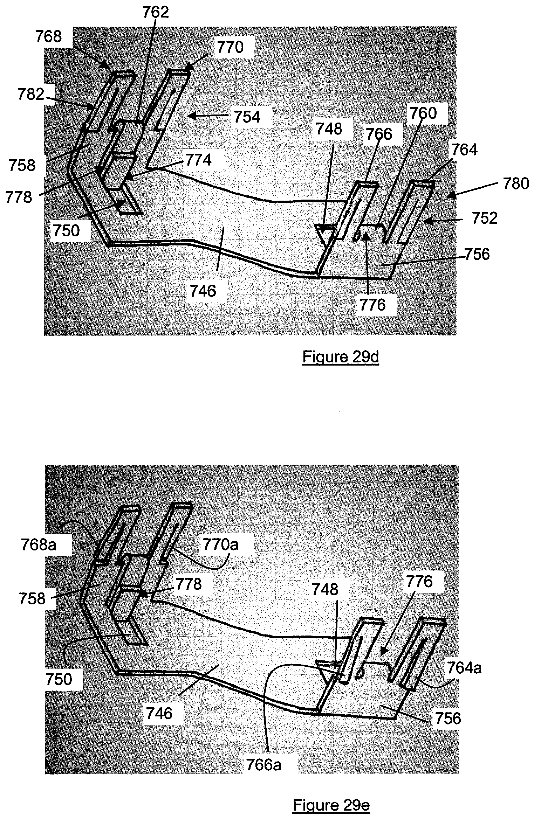

Next, the neck portions 756,758 are folded further inwardly so that the neck portions 756,758 are substantially perpendicular to the plane of the base member 746 as shown in Figure 29d, and the neck portions 756,758 and respective side arms 764,766,768,770 form corresponding connector bracket legs 780,782 of the connector bracket 740. In this way, the first folds 772,774 of the finger members 760,762 are located within the corresponding openings 748,750. It should be appreciated that the openings 748,750 are sized to accommodate or receive the width of the respective finger members 760,762. It can also be appreciated that the series of folded finger members 760,762 form corresponding protruding engagement elements 776,778 which occlude or at least partially block the respective openings 748,750.

The separable side arm members 764a,766a,768a,770a are flexed apart at the slits as shown in Figure 29e so that the respective side arms 764,766,768,770 create a wider profile near the neck portions 756,758 than at the pivoted end. The side arm members 764a,766a,768a,770a are thus compressible inwards (due to the slits) which enables the side arms members 764a,766a,768a,770a to spring outwardly and these biased side arm members 764a,766a,768a,770a function as stoppers which form the self-locking mechanism 742.

To explain the operation of the connector bracket 740, the arrangement of Figure 10 is used and this is shown in Figure 30 but instead of the pin connector assembly 600, the connector bracket 740 is shown to couple the connecting plate 506 to the vertical stiffener 300. Similar to the pin connector assembly 600 (and specifically the pin connector bracket 604), the first of the connector bracket legs 782 is inserted through the elongate slot 1224a and elongate slot 310a which are in registration or aligned with each other, and the protruding engagement element 778 is inserted into the centre opening 1224b and the second secondary recess 310d. It should be appreciated that the dimensions of the connector bracket legs 782 and the protruding engagement element 778 are sized to fit snugly into the elongate slot 1224a and elongate slot 310a, and the centre opening 1224b respectively, so that there is minimum movement.

At the same time, the other connector bracket leg 780 is inserted into the elongate slot 1230a and the elongate slot 316a with the other protruding engagement element 776 inserted into the centre opening 1230b and the second secondary recess 316d of the middle perforation 316.

The height "H" of the neck portions 756,758 (only one is illustrated in Figure 30) up till the slit of the separable side arm members 764a,766a,768a,770a are sized or configured to suit the combined thickness "T" of the connecting plate 506 and the vertical stiffener 300. For example, the combined thickness "T" may range between 4.5mm and 6mm and the height "H" of the neck portion may be configured as 6.5mm and thus, the tolerance for a good fit may be between 2mm and as small as 0.5mm.

Figures 31a to 31c are simplified cross-sectional views of Figure 30 from the top illustrating various stages of coupling the connector bracket 740 to the stiffener 300 and the connecting plate 506 and shows the thickness T (see Figure 31b). Figures 31a to 31c only shows two of the side arm members 764a and 768a for simplicity, although it should be appreciated that the other side arm members 766a,770a operate in the same manner. As the bracket legs 780,782 are inserted into the perforations of the connecting plate 506 and the vertical stiffener 300 (see Figures 31a and 31b), the size of aligned elongate slot 1224a and elongate slot 310a compresses the side arm members 764a,768a. When the separable side arm members 764a,768a clear the thickness T, the slightly compressed side arm members 764a,768a bias outwardly and catch onto inner surface of the vertical stiffener 300, as shown in Figure 31c. In this way, the side arm members 764a,766a,768a,770a function like a compressible or one-way catch to allow the connector bracket 740 to lock or secure itself to the connecting plate 506 and the vertical stiffener 300 and at the same time, couples them together.

The connector bracket 740 is particularly advantageous since there is no need of an additional connector pin, unlike the pin connector assembly 600, and as a result, there are cost savings. The self-locking mechanism 742 in the form of the compressible side arm members 764a,766a,768a,770a are easy to operate and secure, since once the side arm members 764a,766a,768a,770a locks in place, it is not possible to access them (since they would be on the inside of the stiffener 300). Both the connector bracket 740 and the pin connector assembly 600 enables locking from one direction since it is not possible to access these components from within the stiffener 300. Of course, the side arm members 764a,766a,768a,770a may be flexed outward in a different direction than that shown in Figures 31a to 31c.

It has also been found that the neck portions 756,758 which join the respective side arms 764,766, 768,770 and are configured to match the dimension of the respective perforations (i.e. the elongate slot 1224a and elongate slot 310a; and elongate slot 1230a and the elongate slot 316a), and together with respective protruding engagement elements 776,778 being engaged in the respective openings (i.e. centre opening 1224b and the second secondary recess 310d; and centre opening 1230b and the second secondary recess 316d), this allows the connector bracket 740 to withstand loads of 600 kg to 750 kg for typical steel grades and thicknesses likely to be employed.

It is envisaged that the connector bracket 740 may be configured with one bracket leg (780 or 782) instead of two, depending on applications, similar to what is illustrated in Figures 22 to 24.

The connector bracket 740 is preferably integrally formed from a single sheet of metal using progressive punching or other known metal forming process, and indeed, just like the rest of the components of the support apparatus, without any welding. However, with advancement in 3D printing technology, it is envisaged that the components of the described embodiment may be 3D printed too.

It should be appreciated that the components of the described embodiments have wide applications. In particular, the support apparatus 100, the hanger end plate assembly 200, the pin connector assembly 600 and the connector bracket 740 etc may be used to support walls or other structures without any walls. For example, some or all of these components may be used for constructing sheltered pedestrian walkways, signage post support structures, building structures, highway sound barriers, racking support structures, partition support structures and railings balustrades and fences etc. Indeed, the pin connector assembly 600 and the connector bracket 740 with its self-locking mechanism may be used to replace conventional means of fastening (bolts and welds) etc. The application is enormous.

Having now fully described the invention, it should be apparent to one of ordinary skill in the art that many modifications can be made hereto without departing from the scope as claimed.

## Claims

1. A connector (740) operable to couple two or more components (300;506) together, the connector (740) comprising:
at least one bracket leg (782, 780) insertable into respective aligned perforations (1224a;310a;1230a;316a) of the two or more components (300;506); and
a base member (746) connected to the at least one bracket leg (782, 780), the base member (746) having a planar body and at least one opening (748,750) formed in the planar body,
wherein the at least one bracket leg (782, 780) includes:
a protruding engagement element (776, 778) arranged to at least partially occlude the at least one opening (748,750) formed in the planar body;
a self-locking mechanism (742) operable to secure the at least one bracket leg (782, 780) to and coupling the two or more components (300;506) together; and
a neck portion (756, 758) common to the protruding engagement member (776, 778) and the self-locking mechanism (742), the neck portion (756, 758) being operable to be insertable into the respective aligned perforations (1224a;310a;1230a;316a) of the two or more components (300;506); and wherein:
the self-locking mechanism includes at least one compressible side arm member (764, 766, 768, 770) extending beyond the neck portion (756, 758), the at least one compressible side arm member (764, 766, 768, 770) having a slit and a separable side arm member (764a, 766a, 768a, 770a) that has a pivoted end and a free end, the at least one compressible side arm member (764, 766, 768, 770) being operable between a compressed position in which the separable side arm member (764a, 766a, 768a, 770a) is compressed inwardly towards the slit to allow the at least one compressible side arm member (764, 766, 768, 770) to be inserted through the respective aligned perforations of the two or more components (300;506), and an uncompressed position in which the separable side arm member (764a, 766a, 768a, 770a) is flexed outwardly away from the slit to enable the free end of the separable side arm member (764a, 766a, 768a, 770a) to engage with a surface of the two or more components (300;506) thereby locking the two or more components (300;506).

2. A connector (740) according to claim 1, wherein size of the neck portion (756, 758) is configured to suit combined thickness of the two or more components (300;506).

3. A connector (740) according to claim 1 or 2, wherein the at least one bracket leg (782, 780) and the corresponding protruding engagement element (776, 778) are operable to fit snugly into the respective aligned perforations (1224a;310a;1230a;316a) of the two or more components (300;506).

4. A connector (740) according to any preceding claim, wherein the protruding engagement element (776, 778) includes a folded finger member.

5. In combination, a connector (740) according to any of claims 1 to 4, and two or more components (300;506), each component (300;506) having respective perforations (1224a;310a;1230a;316a); wherein the neck portion (756, 758) and the self-locking mechanism (742) of the at least one bracket leg (782, 780) are inserted into the respective aligned perforations (1224a;310a;1230a;316a) of the two or more components (300;506) to lock the two or more components (300;506) together when the at least one compressible side arm member (764, 766, 768, 770) of the self-locking mechanism (742) is in the uncompressed position.

6. A method of coupling two or more components (300;506) together using the connector (740) of any one of claims 1 to 4, the two or more components (300;506) having a combined thickness, the method comprising:
inserting the at least one bracket leg (782,780) including the protruding engagement element (776, 778), the self-locking mechanism (742) and the neck portion (756, 758) into respective aligned perforations (1224a;310a;1230a;316a) of the two or more components (300;506); the aligned perforations (1224a;310a;1230a;316a) compressing the separable side arm member (764a, 766a, 768a, 770a) inwardly as the compressible side arm member (764, 766, 768, 770) is being inserted into the aligned perforations (1224a;310a;1230a;316a) and when the free end of the separable side arm member (764a, 766a, 768a, 770a) clears the combined thickness of the two or more components (300;506), the separable side arm member (764a, 766a, 768a, 770a) flexes outwardly to lock the two or more components (300;506) together.

## Patentansprüche

1. Verbinder (740), der betätigt werden kann, um zwei oder mehr Komponenten (300; 506) miteinander zu koppeln, wobei der Verbinder (740) Folgendes umfasst:
mindestens einen Klammerschenkel (782, 780), der in jeweilige ausgerichtete Perforationen (1224a; 310a; 1230a; 316a) der zwei oder mehr Komponenten (300; 506) einsteckbar ist, und
ein Basiselement (746), das mit dem mindestens einen Klammerschenkel (782, 780) verbunden ist, wobei das Basiselement (746) einen ebenen Körper und mindestens eine in dem ebenen Körper ausgebildete Öffnung (748, 750) aufweist,
wobei der mindestens eine Klammerschenkel (782, 780) Folgendes einschließt:
ein vorstehendes Eingriffselement (776, 778), das so angeordnet ist, dass es die mindestens eine in dem ebenen Körper ausgebildete Öffnung (748, 750) mindestens teilweise verschließt;
einen Selbstverriegelungsmechanismus (742), der betätigt werden kann, um den mindestens einen Klammerschenkel (782, 780) an den zwei oder mehr Komponenten (300; 506) zu befestigen und diese miteinander zu koppeln, und
einen Halsabschnitt (756, 758), der dem vorstehenden Eingriffselement (776, 778) und dem Selbstverriegelungsmechanismus (742) gemeinsam ist, wobei der Halsabschnitt (756, 758) betätigt werden kann, um ihn in die jeweiligen ausgerichteten Perforationen (1224a; 310a; 1230a; 316a) der zwei oder mehr Komponenten (300; 506) einzustecken; und wobei:
der Selbstverriegelungsmechanismus mindestens ein komprimierbares Seitenarmelement (764, 766, 768, 770) einschließt, das sich über den Halsabschnitt (756, 758) hinaus erstreckt, wobei das mindestens eine komprimierbare Seitenarmelement (764, 766, 768, 770) einen Schlitz und ein trennbares Seitenarmelement (764a, 766a, 768a, 770a) aufweist, das ein schwenkbares Ende und ein freies Ende hat, wobei das mindestens eine komprimierbare Seitenarmelement (764, 766, 768, 770) zwischen einer komprimierten Position, in der das trennbare Seitenarmelement (764a, 766a, 768a, 770a) nach innen in Richtung des Schlitzes komprimiert ist, damit das mindestens eine komprimierbare Seitenarmelement (764, 766, 768, 770) durch die jeweiligen ausgerichteten Perforationen der zwei oder mehr Komponenten (300; 506) eingesteckt werden kann, und einer unkomprimierten Position betätigt werden kann, in der das trennbare Seitenarmelement (764a, 766a, 768a, 770a) von dem Schlitz nach außen weg gebogen ist, so dass das freie Ende des trennbaren Seitenarmelements (764a, 766a, 768a, 770a) mit einer Oberfläche der zwei oder mehr Komponenten (300; 506) in Eingriff kommen kann, wodurch die zwei oder mehr Komponenten (300; 506) verriegelt werden.

2. Verbinder (740) nach Anspruch 1, wobei eine Größe des Halsabschnitts (756, 758) so konfiguriert ist, dass sie zu einer kombinierten Dicke der zwei oder mehr Komponenten (300; 506) passt.

3. Verbinder (740) nach Anspruch 1 oder 2, wobei der mindestens eine Klammerschenkel (782, 780) und das entsprechende vorstehende Eingriffselement (776, 778) so betätigbar sind, dass sie eng in die jeweiligen ausgerichteten Perforationen (1224a; 310a; 1230a; 316a) der zwei oder mehr Komponenten (300; 506) passen.

4. Verbinder (740) nach einem vorhergehenden Anspruch, wobei das vorstehende Eingriffselement (776, 778) ein gefaltetes Fingerelement enthält.

5. In Kombination, Verbinder (740) nach einem der Ansprüche 1 bis 4 und zwei oder mehr Komponenten (300; 506), wobei jede Komponente (300; 506) jeweilige Perforationen (1224a; 310a; 1230a; 316a) aufweist, wobei der Halsabschnitt (756, 758) und der Selbstverriegelungsmechanismus (742) des mindestens einen Klammerschenkels (782, 780) in die jeweiligen ausgerichteten Perforationen (1224a; 310a; 1230a; 316a) der zwei oder mehr Komponenten (300; 506) eingesteckt werden, um die zwei oder mehr Komponenten (300; 506) miteinander zu verriegeln, wenn das mindestens eine komprimierbare Seitenarmelement (764, 766, 768, 770) des Selbstverriegelungsmechanismus (742) in der unkomprimierten Position ist.

6. Verfahren zum Koppeln von zwei oder mehr Komponenten (300; 506) miteinander unter Verwendung des Verbinders (740) nach einem der Ansprüche 1 bis 4, wobei die zwei oder mehr Komponenten (300; 506) eine kombinierte Dicke aufweisen, wobei das Verfahren Folgendes umfasst:
Einstecken des mindestens einen Klammerschenkels (782, 780) einschließlich des vorstehenden Eingriffselements (776, 778), des Selbstverriegelungsmechanismus (742) und des Halsabschnitts (756, 758) in jeweilige ausgerichtete Perforationen (1224a; 310a; 1230a; 316a) der zwei oder mehr Komponenten (300; 506); wobei die ausgerichteten Perforationen (1224a; 310a; 1230a; 316a) das trennbare Seitenarmelement (764a, 766a, 768a, 770a) nach innen komprimieren, wenn das komprimierbare Seitenarmelement (764, 766, 768, 770) in die ausgerichteten Perforationen (1224a; 310a; 1230a; 316a) eingesteckt wird, und wenn das freie Ende des trennbaren Seitenarmelements (764a, 766a, 768a, 770a) die kombinierte Dicke der zwei oder mehr Komponenten (300; 506) freigibt, biegt sich das trennbare Seitenarmelement (764a, 766a, 768a, 770a) nach außen, um die zwei oder mehr Komponenten (300; 506) miteinander zu verriegeln.

## Revendications

1. Connecteur (740) pouvant être actionné pour coupler ensemble deux composants (300 ; 506) ou plus, le connecteur (740) comprenant :
au moins une patte de support (782, 780) pouvant être insérée dans des perforations alignées respectives (1224a ; 310a ; 1230a ; 316a) des deux composants (300 ; 506) ou plus ; et
un élément de base (746) relié à l'au moins une patte de support (782, 780), l'élément de base (746) présentant un corps plan et au moins une ouverture (748, 750) formée dans le corps plan,
dans lequel l'au moins une patte de support (782, 780) inclut :
un élément de mise en prise faisant saillie (776, 778) agencé pour obturer au moins partiellement l'au moins une ouverture (748, 750) formée dans le corps plan ;
un mécanisme de verrouillage automatique (742) pouvant être actionné pour fixer l'au moins une patte de support (782, 780) aux deux composants (300 ; 506) ou plus et les coupler ensemble ; et
une partie de col (756, 758) commune à l'élément de mise en prise faisant saillie (776, 778) et au mécanisme de verrouillage automatique (742), la partie de col (756, 758) pouvant être actionnée pour être insérée dans les perforations alignées respectives (1224a ; 310a ; 1230a ; 316a) des deux composants (300 ; 506) ou plus ; et dans lequel :
le mécanisme de verrouillage automatique inclut au moins un élément de bras latéral compressible (764, 766, 768, 770) s'étendant au-delà de la partie de col (756, 758), l'au moins un élément de bras latéral compressible (764, 766, 768, 770) présentant une fente et un élément de bras latéral séparable (764a, 766a, 768a, 770a) qui présente une extrémité pivotée et une extrémité libre, l'au moins un élément de bras latéral compressible (764, 766, 768, 770) pouvant être actionné entre une position comprimée dans laquelle l'élément de bras latéral séparable (764a, 766a, 768a, 770a) est comprimé vers l'intérieur en direction de la fente pour permettre à l'au moins un élément de bras latéral compressible (764, 766, 768, 770) d'être inséré à travers les perforations alignées respectives des deux composants (300 ; 506) ou plus, et une position non comprimée dans laquelle l'élément de bras latéral séparable (764a, 766a, 768a, 770a) est fléchi vers l'extérieur à l'écart de la fente pour permettre à l'extrémité libre de l'élément de bras latéral séparable (764a, 766a, 768a, 770a) de venir en prise avec une surface des deux composants (300 ; 506) ou plus, en verrouillant ainsi les deux composants (300 ; 506) ou plus.

2. Connecteur (740) selon la revendication 1, dans lequel une taille de la partie de col (756, 758) est configurée pour s'adapter à une épaisseur combinée des deux composants (300 ; 506) ou plus.

3. Connecteur (740) selon la revendication 1 ou 2, dans lequel l'au moins une patte de support (782, 780) et l'élément de mise en prise faisant saillie correspondant (776, 778) peuvent être actionnés pour s'adapter étroitement dans les perforations alignées respectives (1224a ; 310a ; 1230a ; 316a) des deux composants (300 ; 506) ou plus.

4. Connecteur (740) selon l'une quelconque des revendications précédentes, dans lequel l'élément de mise en prise faisant saillie (776, 778) inclut un élément de doigt plié.

5. En combinaison, connecteur (740) selon l'une quelconque des revendications 1 à 4, et deux composants (300 ; 506) ou plus, chaque composant (300 ; 506) présentant des perforations respectives (1224a ; 310a ; 1230a ; 316a) ; dans lequel la partie de col (756, 758) et le mécanisme de verrouillage automatique (742) de l'au moins une patte de support (782, 780) sont insérés dans les perforations alignées respectives (1224a ; 310a ; 1230a ; 316a) des deux composants (300 ; 506) ou plus pour verrouiller les deux composants (300 ; 506) ou plus ensemble lorsque l'au moins un élément de bras latéral compressible (764, 766, 768, 770) du mécanisme de verrouillage automatique (742) est dans la position non comprimée.

6. Procédé de couplage de deux composants (300 ; 506) ou plus ensemble en utilisant le connecteur (740) selon l'une quelconque des revendications 1 à 4, les deux composants (300 ; 506) ou plus présentant une épaisseur combinée, le procédé comprenant l'étape consistant à :
insérer l'au moins une patte de support (782, 780) incluant l'élément de mise en prise faisant saillie (776, 778), le mécanisme de verrouillage automatique (742) et la partie de col (756, 758) dans des perforations alignées respectives (1224a ; 310a ; 1230a ; 316a) des deux composants (300 ; 506) ou plus ; les perforations alignées (1224a ; 310a ; 1230a ; 316a) comprimant l'élément de bras latéral séparable (764a, 766a, 768a, 770a) vers l'intérieur lorsque l'élément de bras latéral compressible (764, 766, 768, 770) est inséré dans les perforations alignées (1224a ; 310a ; 1230a ; 316a), et lorsque l'extrémité libre de l'élément de bras latéral séparable (764a, 766a, 768a, 770a) libère l'épaisseur combinée des deux composants (300 ; 506) ou plus, l'élément de bras latéral séparable (764a, 766a, 768a, 770a) fléchit vers l'extérieur pour verrouiller ensemble les deux composants (300 ; 506) ou plus.
